# EUROPEAN PATENT APPLICATION

(11) **EP 4 717 650 A1**
(43) Date of publication of application: **01.04.2026**
(21) Application number: 25202735.4
(22) Date of filing: 17.09.2025
(51) Int. Cl.: B66B 1/34, B66B 5/04

(54) **ENCODER MOUNT ON CAR-MOUNTED GOVERNOR**

(30) Priority: 18.09.2024 CN 202411300213
(71) Applicant: Otis Elevator Company, Farmington, Connecticut 06032 (US)
(72) Inventor: Girard, Thomas, Farmington, CT 06032 (US); Vensel, Kyler, Farmington, CT 06032 (US); Rookey, Ralle, Farmington, CT 06032 (US); Luo, Xiaodong, Farmington, CT 06032 (US); Masayda, Thomas, Farmington, CT 06032 (US); Watson, Benjamin, Farmington, CT 06032 (US); Brey, Thomas, Farmington, CT 06032 (US); Shaw, George, Farmington, CT 06032 (US); Hubbard, James L., Farmington, CT 06032 (US); Tang, Xiaobin, Tianjin, 300211 (CN); Thao, Yong, Shanghai, 200335 (CN)
(74) Representative: Schmitt-Nilson Schraud Waibel Wohlfrom Patentanwälte Partnerschaft mbB

(57) **Abstract**

An elevator system in which an elevator car travels in a hoistway is provided. The elevator system includes an anchor, a tensioning mass, a car-mounted governor (CMG) affixable to the elevator car, a rope and a processing board. The CMG includes idler and traction pulleys and at least one encoder mountable on one of the idler and traction pulleys and configured to generate a signal reflective of rotation of the one of the idler and traction pulleys on which the at least one encoder is mounted. The rope is extendible from the anchor, around the idler and traction pulleys and to the tensioning mass to cause idler and traction pulley rotation when the elevator car travels in the hoistway. The processing board is receptive of the signal and is configured to determine at least a position of the elevator car in the hoistway from the signal.

## Description

The present disclosure relates to elevator systems and, in particular, to an elevator system with an encoder mount on a car-mounted governor (CMG).

In an elevator system, in particular, an elevator shaft is built into a building and an elevator car travels up and down along the elevator shaft to arrive at landing doors of different floors of the building. The movement of the elevator is driven by a machine that is controlled by a controller according to instructions received from users of the elevator system. During operational conditions, passengers will typically arrive at an elevator landing in a building, press a call button and wait for the elevator to arrive. Once the elevator arrives and its doors open, the passenger will enter the elevator and select a destination floor. The doors close and the elevator travels upwardly or downwardly to the selected floor whereupon the passenger disembarks.

According to an aspect of the disclosure, an elevator system in which an elevator car travels in a hoistway is provided. The elevator system includes an anchor, a tensioning mass, a car-mounted governor (CMG) affixable to the elevator car, a rope and a processing board. The CMG includes idler and traction pulleys and at least one encoder. The at least one encoder is mountable on one of the idler and traction pulleys and is configured to generate a signal reflective of rotation of the one of the idler and traction pulleys on which the at least one encoder is mounted. The rope is extendible from the anchor, around the idler and traction pulleys and to the tensioning mass to cause idler and traction pulley rotation when the elevator car travels in the hoistway. The processing board is receptive of the signal and is configured to determine at least a position of the elevator car in the hoistway from the signal.

Particular embodiments further may include at least one, or a plurality of, the following optional features, alone or in combination with each other:

In accordance with additional or alternative embodiments, the elevator system further includes discrete sensors deployed in the hoistway for elevator car position detection.

In accordance with additional or alternative embodiments, the idler pulley is disposed above or below the traction pulley and the rope is connected at opposite ends thereof to the anchor and the tensioning mass to extend downwardly from the anchor, around the idler pulley in a first direction, upwardly from the idler pulley, around the traction pulley in a second direction and downwardly to the tensioning mass.

In accordance with additional or alternative embodiments, the processing board is affixable to or integral with the elevator car and is coupled with the at least one encoder to be receptive of the signal and the processing board is configured to determine at least a speed of movement of the elevator car and the position of the elevator car in the hoistway from the signal.

In accordance with additional or alternative embodiments, the processing board is configured to determine at least the speed of the movement of the elevator car and the position of the elevator car in the hoistway from the signal and is further configured for at least one or more of overspeed system (OS) signaling and actuation relay, mechanical trip operation and actuation relay and stall and loss-of-traction determinations.

In accordance with additional or alternative embodiments, the at least one encoder is an incremental-type encoder.

In accordance with additional or alternative embodiments, the at least one encoder includes at least one or more of transmissive sensors, reflective sensors and hall effect sensors.

In accordance with additional or alternative embodiments, the CMG further includes an additional encoder mountable on the one of the idler and traction pulleys on which the at least one encoder is not mounted and the elevator system includes a backup power source for continually powering the CMG and the processing board.

In accordance with additional or alternative embodiments, the CMG further includes an absolute encoder mountable on the one of the idler and traction pulleys on which the at least one encoder is not mounted.

According to an aspect of the disclosure, a car-mounted governor (CMG) affixable to an elevator car of an elevator system is provided. The CMG includes a body, idler and traction pulleys about which a rope extends between an anchor and a rope tensioning mass and at least one encoder, which is mountable on one of the idler and traction pulleys, and which is configured to generate a signal reflective of rotation of the one of the idler and traction pulleys. At least a position of the elevator car in a hoistway is determinable from the signal.

Particular embodiments further may include at least one, or a plurality of, the following optional features, alone or in combination with each other:
In accordance with additional or alternative embodiments, a footprint of the body encompasses the idler and traction pulleys and the CMG has an absence of a remote trip device, an overspeed system (OS) switch and a remote reset device (RRD).

In accordance with additional or alternative embodiments, the CMG further includes an electro-mechanical (EM) locking mechanism for safety actuation with remote tripping.

In accordance with additional or alternative embodiments, at least a speed of movement of the elevator car and the position of the elevator car in the hoistway are determinable from the signal.

In accordance with additional or alternative embodiments, the signal is usable for at least one or more of overspeed system (OS) signaling and actuation relay, mechanical trip operation and actuation relay and stall and loss-of-traction determinations.

In accordance with additional or alternative embodiments, the at least one encoder is an incremental-type encoder.

In accordance with additional or alternative embodiments, the at least one encoder includes at least one or more of transmissive sensors, reflective sensors and hall effect sensors.

In accordance with additional or alternative embodiments, the CMG further includes a continually powered additional encoder mountable on the one of the idler and traction pulleys on which the at least one encoder is not mounted.

In accordance with additional or alternative embodiments, the CMG further includes an absolute encoder mountable on the one of the idler and traction pulleys on which the at least one encoder is not mounted.

According to an aspect of the disclosure, an elevator car processing board, which is receptive of a signal from at least one encoder mounted on one of idler and traction pulleys of a car-mounted governor (CMG) of the elevator car and from which at least a position of the elevator car in a hoistway is determinable, is provided. The elevator car processing board includes a processor communicative with the at least one encoder for reception of the signal, with a landing sensor for drift and re-zero checking and with an external elevator control system, first switch elements communicative with the processor for triggering a mechanical trip, second switch elements communicative with the processor for first safety chain operations and third switch elements communicative with the processor for second safety chain operations.

Particular embodiments further may include at least one, or a plurality of, the following optional features, alone or in combination with each other:
In accordance with additional or alternative embodiments, the elevator car processing board is receptive of an additional signal from an encoder mounted on the one of the idler and traction pulleys on which the at least one encoder is not mounted and further includes an additional processor and the processor and the additional processor are configured to compare the signal and the additional signal for synchronization checking.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2 is a schematic diagram illustrating an elevator system in accordance with embodiments;
FIG. 3 is a schematic diagram illustrating an elevator system with an encoder on an idler pulley of a CMG in accordance with embodiments;
FIG. 4 is a plan view of a CMG in accordance with embodiments; and
FIG. 5 is a schematic diagram illustrating an elevator car processing board in accordance with embodiments.

Every elevator uses some system or algorithm, such as a position determining system, to determine a location of a car in a hoistway. Many lower-cost position determining systems use a machine encoder to approximate the position relative to known hoistway positions. Recently, however, it has been found that certain subsystems in modern elevators require increasingly accurate position information for critical safety functions that lower-cost position determining systems might be incapable of providing.

Thus, as will be described below, systems and methods are provided for determining an accurate position of an elevator car in a hoistway by incorporating a low cost encoder on a car-mounted governor (CMG). The CMG encoder will provide accurate car speed and position information and will be connected with a printed circuit board (PCB) which has redundant circuitry for speed and position computation and redundant output relays required for SIL 3 safety related functions. CMG encoder operations will also be redundant for SIL 3 compliance. The CMG encoder can be provided as at least one or more of a reflective optical encoder with multiple encoder circuits on one PCB, hall effect sensors with a reluctance wheel, etc. In addition to the CMG encoder, some traditional discreet sensors will be provided to correct and/or re-calibrate the hoistway absolute position determinations. Also, the CMG encoder and the PCB can be used for other functions including, but not limited to, car overspeed system (OS) detection, safety actuation controls, loss of traction detections, active controls of car bouncing on higher rise elevators, load weighing, etc.

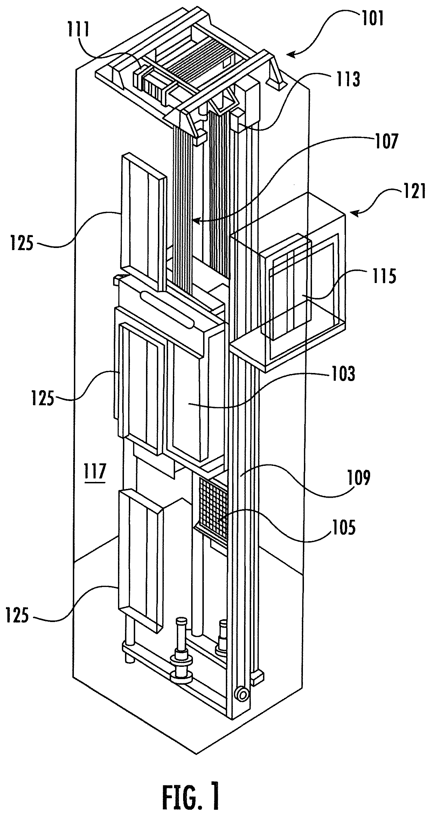

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor is a variable speed drive, which may be commonly referred to as a drive. As understood by those skilled in the art, the drive is comprised of several electrical circuits such as an inverter, rectification stage, filtering, and control circuitry towards the purpose of controlling the motor. The machine 111 may include a traction sheave that imparts force to tension member 107 to move the elevator car 103 within elevator shaft 117.

The elevator system 101 also includes one or more elevator doors. The elevator door may be integrally attached to the elevator car 103 or the elevator door may be located on a landing 125 of the elevator system 101, or both. Embodiments disclosed herein may be applicable to both an elevator door integrally attached to the elevator car 103 or an elevator door located on a landing 125 of the elevator system 101, or both. The elevator door opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars, escalator components and moving walkways equipped with friction wheels, pinch wheels or traction wheels). FIG. 1 is merely a non-limiting example presented for illustrative and explanatory purposes.

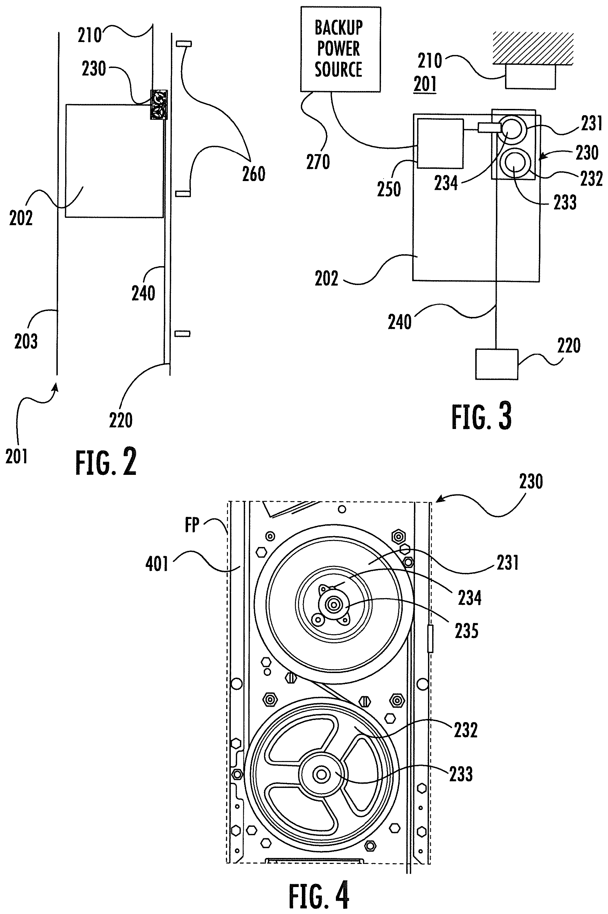

With continued reference to FIG. 1 and with additional reference to FIGS. 2-5, an elevator system 201, such as the elevator system 101 of FIG. 1, is provided with an elevator car 202 that travels in a hoistway 203, as in the elevator car 103 and the hoistway or elevator shaft 117 of FIG. 1. The elevator system 201 includes a rope anchor 210, a rope tensioning mass 220, a CMG 230, a rope 240 and a processing board 250. The CMG 230 is affixable to the elevator car 202 and includes a traction pulley 231, an idler pulley 232 and at least one encoder 233. The at least one encoder 233 can be mountable on one of the traction pulley 231 and the idler pulley 232 and can be configured to generate a signal reflective of rotation of the one of the traction pulley 231 and the idler pulley 232 on which the at least one encoder 233 is mounted (the following description will generally relate to the case in which the at least one encoder 233 is mounted to the idler pulley 232; this is being done for clarity and brevity and should not be interpreted as limiting the disclosure or the claims in any way). The rope 240 is extendible from the rope anchor 210, around the idler pulley 232 and the traction pulley 231 and to the rope tensioning mass 220 to cause rotation of the idler pulley 232 when the elevator car 202 travels in the hoistway 203. In greater detail, the idler pulley 232 can be disposed above or below the traction pulley 231 (the following description will generally relate to the case in which the idler pulley 232 is disposed below the traction pulley 231; this is being done for clarity and brevity and should not be interpreted as limiting the disclosure or the claims in any way) and, in these or other cases, the rope 240 can be connected at opposite ends thereof to the rope anchor 210 and the rope tensioning mass 220 to extend downwardly from the rope anchor 210, around the idler pulley 232 in a first (i.e., clockwise) direction, upwardly from the idler pulley 232, around the traction pulley 231 in a second (i.e., counter-clockwise) direction and downwardly to the rope tensioning mass 220. The processing board 250 is receptive of the signal from the at least one encoder 233 and is configured to determine at least a position of the elevator car 202 in the hoistway 203 from the signal.

As used herein, the terms "traction pulley" and "idler pulley" are and can be synonymous with "traction sheave" and "idler sheave," respectively.

As shown in FIG. 2, the elevator system 202 can further include one or more discrete sensors 260 and/or magnetic strips. The one or more discrete sensors 260 can be deployed in or along the hoistway 203 and can generate respective signals that can be used for position detection of the elevator car 202 in the hoistway 203. This position detection can be used, as an example, for calibration of other components of the elevator system 201. Calibration and re-calibration can be accomplished via learn-runs that indicate when the elevator car 202 is at a specific position. Calibration and re-calibration can occur on a routine basis to ensure absolute position measurements remain accurate.

As shown in FIG. 3, the processing board 250 can be affixable to or integral with the elevator car 202 and coupled with the at least one encoder 233 to be receptive of the signal. In these or other cases, the processing board 250 can be configured to determine from the signal at least a speed of movement of the elevator car 202 upwardly and downwardly in the hoistway 203 and the position of the elevator car 202 in the hoistway 203. Where the processing board 250 is configured to determine at least the speed of the movement of the elevator car 202 upwardly and downwardly in the hoistway 203 and the position of the elevator car 202 in the hoistway 203 from the signal, the processing board 250 can be further configured for at least one or more of overspeed system (OS) signaling and actuation relay, mechanical trip operation and actuation relay and stall and loss-of-traction determinations.

In accordance with embodiments, the at least one encoder 233 can be an incremental-type encoder and can include or be provided as at least one or more of transmissive sensors, reflective sensors and hall effect sensors. By way of example, which is not limiting of the disclosure or the following claims in any way, the idler pulley 232 can be a toothed rotating wheel and the at least one encoder 233 can include or be provided as a hall effect sensor disposed in close proximity to the teeth on the rotating wheel whereby the hall effect sensor is disposed and configured to detect the presence of each tooth on the rotating wheel as the wheel rotates. In these or other cases, the hall effect sensor generates a square wave signal, with high pulses indicative of the presence of the raised portion of a tooth and valleys indicative of low spots between teeth. This is the signal processed by the board 250. Absolute position of the elevator car 202 can thus be tracked by continually counting pulses and velocity can be calculated based on the frequency of the pulses. In order to maintain absolute position accuracy, periodic re-calibration may be required in order to reset any drift or error stack up, utilizing additional sensors such as the one or more discrete sensors 260. In addition, in order to maintain position information during a power-loss event, back-up power can be available, a capacitor can be provided to store electrical energy and/or kinetic energy of the rotating wheel can be converted into electrical energy via a generator to keep the capacitor charged during normal operation.

As shown in FIG. 3, the CMG 230 can further include an additional encoder 234. The additional encoder 234 can be mountable on the traction pulley 231 (i.e., or the one of the traction pulley 231 and the idler pulley 232 on which the at least one encoder 233 is not mounted) and, in these or other cases, the elevator system 201 can include a backup power source 270 for continually powering the CMG 230 and the processing board 250. In accordance with embodiments, the additional encoder 234 can include or be provided as an absolute encoder that is mountable on the traction pulley 231 (i.e., or the one of the traction pulley 231 and the idler pulley 232 on which the at least one encoder 233 is not mounted) and, in these or other cases, the absolute encoder may not require backup power from the backup power source 270.

With continued reference to FIG. 4, the CMG 230 can be affixable to the elevator car 202 of the elevator system 201 and can include a body 401, the traction pulley 231 and the idler pulley 232 about which the rope 240 extends between the rope anchor 210 and the rope tensioning mass 220 (see FIGS. 2 and 3) and the at least one encoder 233. As noted above, the at least one encoder 233 can be mountable to the idler pulley 232 and can be configured to generate the signal to be reflective of rotation of the idler pulley 232 and from which at least the position of the elevator car 202 in the hoistway 203 is determinable. The CMG 230 can further include an electro-mechanical (EM) locking mechanism 235. The EM locking mechanism 235 can be mountable to one of the traction pulley 231 and the idler pulley 232 or can be generally disposed anywhere within the CMG 230 for safety actuation with remote tripping and can include a switch for periodic actuation checks.

As shown in FIG. 4, a footprint FP of the body 401 can be sized and shaped to tightly encompass the traction pulley 231 and the idler pulley 232, with the CMG 230 otherwise having an absence of a remote trip device, an overspeed system (OS) switch and a remote reset device (RRD) (to the extent that the remote trip device, the OS switch and the RRD would be separate from the traction pulley 231 and/or the idler puller 232 in such as way as to require that the FP of the body 401 be enlarged). The absence of the remote trip device, the OS switch and the RRD effectively reduces part numbers and a weight of the CMG 230 as compared to conventional configurations.

At least a speed of the movement of the elevator car 202 upwardly and downwardly in the hoistway 203 and the position of the elevator car 202 in the hoistway 203 are determinable from the signal and, in these or other cases, the signal can be usable for at least one or more of OS signaling and actuation relay, mechanical trip operation and actuation relay and stall and loss-of-traction determinations.

In accordance with embodiments, the at least one encoder 233 can be an incremental-type encoder and can include or be provided as at least one or more of transmissive sensors, reflective sensors and hall effect sensors as described above. In addition, the CMG 230 can further include the additional encoder 234. The additional encoder 234 can be mountable on the traction pulley 231 and, in these or other cases, the elevator system 201 can include a backup power source 270 (see FIG. 3) for continually powering the CMG 230 and the processing board 250. In accordance with embodiments, the additional encoder 234 can include or be provided as an absolute encoder that is mountable on the traction pulley 231 and, in these or other cases, the absolute encoder may not require backup power from the backup power source 270.

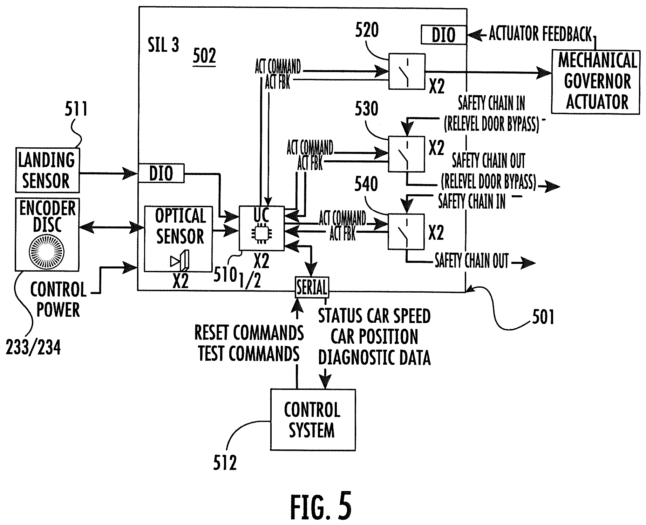

With continued reference to FIG. 5, an elevator car processing board 501, such as the processing board 250, is provided and is receptive of the signal from the at least one encoder 233 mounted to the idler pulley 232 of the CMG 230 of the elevator car 202 and from which at least the position of the elevator car 202 in the hoistway 203 is determinable. As shown in FIG. 5, the elevator car processing board 501 can be provided as a printed circuit board (PCB) 502 and is receptive of control power and backup power (i.e., from the backup power source 270 of FIG. 3) and can include a processor 510₁, first switch elements 520, second switch elements 530 and third switch elements 540. The processor 510 is communicative with at least the at least one encoder 233 for reception of the signal, with a landing sensor 511 for drift and re-zero checking and with an external elevator control system 512. The first switch elements 520 provide redundancy and are communicative with the processor 510 for triggering a mechanical trip. The second switch elements 530 provide redundancy and are communicative with the processor 510 for first safety chain operations. The third switch elements 540 provide redundancy and are communicative with the processor 510 for second safety chain operations.

The elevator car processing board 501 can also be receptive of an additional signal from the additional encoder 234 mounted to the traction pulley 231 of the CMG 230 and, in these or other cases, can further include an additional processor 510₂. The processor 510, and the additional processor 510₂ can be configured to compare the signal and the additional signal for synchronization checking.

Regarding backup power requirements, the processor 510₁ and the additional processor 510₂ can retain position information in memory during stops and/or power outages and/or for triggering safety actuations. The backup power can be provided, for example, by a capacitor on the elevator car processing board 501 (i.e., to power the elevator car processing board 501 for a few seconds and long enough for an E-stop from ≤ 2.5 m/s), by a back-up battery and/or by the backup power source 270 (see FIG. 3).

Technical effects and benefits of the present disclosure are the provision of a CMG with an encoder for low-cost, accurate car position detection as compared to current absolute position systems with lower material and installation cost and which is also less cost sensitive to elevator rise. In addition, the CMG with the encoder is low-cost SIL 3 rate and allows for introduction of improved governor operations with more robust OS detection and electronic safety actuation.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A car-mounted governor (CMG) affixable to an elevator car of an elevator system, the CMG comprising:
a body;
idler and traction pulleys about which a rope extends between an anchor and a rope tensioning mass; and
at least one encoder, which is mountable on one of the idler and traction pulleys, and which is configured to generate a signal reflective of rotation of the one of the idler and traction pulleys,
at least a position of the elevator car in a hoistway being determinable from the signal.

2. The CMG according to claim 1, wherein a footprint of the body encompasses the idler and traction pulleys and the CMG has an absence of a remote trip device, an overspeed system (OS) switch and a remote reset device (RRD).

3. The CMG according to claim 1 or 2, further comprising an electro-mechanical (EM) locking mechanism for safety actuation with remote tripping.

4. The CMG according to any of claims 1 to 3, wherein at least a speed of movement of the elevator car and the position of the elevator car in the hoistway are determinable from the signal.

5. The CMG according to claim 4, wherein the signal is usable for at least one or more of:
overspeed system (OS) signaling and actuation relay,
mechanical trip operation and actuation relay, and
stall and loss-of-traction determinations.

6. The CMG according to any of claims 1 to 5, wherein the at least one encoder is an incremental-type encoder.

7. The CMG according to any of claims 1 to 6, wherein the at least one encoder comprises at least one or more of transmissive sensors, reflective sensors and hall effect sensors.

8. The CMG according to any of claims 1 to 7, further comprising a continually powered additional encoder mountable on the one of the idler and traction pulleys on which the at least one encoder is not mounted.

9. The CMG according to any of claims 1 to 8, further comprising an absolute encoder mountable on the one of the idler and traction pulleys on which the at least one encoder is not mounted.

10. An elevator car processing board, which is receptive of a signal from at least one encoder mounted on one of idler and traction pulleys of a car-mounted governor (CMG) of the elevator car and from which at least a position of the elevator car in a hoistway is determinable, the elevator car processing board comprising:
a processor communicative with the at least one encoder for reception of the signal, with a landing sensor for drift and re-zero checking and with an external elevator control system;
first switch elements communicative with the processor for triggering a mechanical trip;
second switch elements communicative with the processor for first safety chain operations; and
third switch elements communicative with the processor for second safety chain operations.

11. The elevator car processing board according to claim 10, wherein:
the elevator car processing board is receptive of an additional signal from an encoder mounted on the one of the idler and traction pulleys on which the at least one encoder is not mounted and further comprises an additional processor, and
the processor and the additional processor are configured to compare the signal and the additional signal for synchronization checking.

12. An elevator system in which an elevator car travels in a hoistway, the elevator system comprising:
an anchor;
a tensioning mass;
the car-mounted governor (CMG) according to any of claims 1 to 9;
a rope extendible from the anchor, around the idler and traction pulleys and to the tensioning mass to cause idler and traction pulley rotation when the elevator car travels in the hoistway; and
the processing board according to claim 10 or 11.

13. The elevator system according to claim 12, further comprising discrete sensors deployed in the hoistway for elevator car position detection.

14. The elevator system according to claim 12 or 13, wherein:
the idler pulley is disposed above or below the traction pulley, and
the rope is connected at opposite ends thereof to the anchor and the tensioning mass to extend downwardly from the anchor, around the idler pulley in a first direction, upwardly from the idler pulley, around the traction pulley in a second direction and downwardly to the tensioning mass.

15. The elevator system according to any of claims 12 to 14, wherein:
the processing board is affixable to or integral with the elevator car and is coupled with the at least one encoder to be receptive of the signal, and
the processing board is configured to determine at least a speed of movement of the elevator car and the position of the elevator car in the hoistway from the signal; and/or
wherein the CMG further comprises an additional encoder mountable on the one of the idler and traction pulleys on which the at least one encoder is not mounted, and
the elevator system comprises a backup power source for continually powering the CMG and the processing board.
